# EUROPEAN PATENT APPLICATION

(11) **EP 1 916 804 A1**
(43) Date of publication of application: **30.04.2008**
(21) Application number: 07720765.2
(22) Date of filing: 12.04.2007
(51) Int. Cl.: H04L 12/28

(54) **A VALUE ADDED SERVICE NETWORK, AN IVR SERVER AND A METHOD FOR ANALYZING THE PROCESS TRACK IN REAL TIME**

(30) Priority: 03.08.2006 CN 200610109263
(71) Applicant: Huawei Technologies Co., Ltd., Longgang District, Shenzhen, Guangdong 518129 (CN)
(72) Inventor: DENG, Qingfeng, Shenzhen Guangdong 518129 (CN); XIE, Chunfeng, Shenzhen Guangdong 518129 (CN); LIANG, Zhen, Shenzhen Guangdong 518129 (CN); WANG, Jing, Shenzhen Guangdong 518129 (CN)
(74) Representative: Thun, Clemens
(86) International application number: PCT/CN2007/001192
(87) International publication number: WO 2008/017221

(57) **Abstract**

A value added service network is disclosed in the present invention. The value added service network includes an IVR server and a flow track analyzing system. The present invention also disclosed an IVR server, a flow track analyzing system and methods for analyzing a value added service flow track. According to the present invention, while executing a value added service flow corresponding to a system access code dialed by a user, the IVR server records flow track information in the flow. The flow track analyzing system acquires and analyzes the flow track information, thus analyzing the value added service flow track in real time is implemented. In addition, an operator may determine a critical path of the value added service flow according to a real-time analyzing result. According to the flow track information and flow logic information, the operator may also calculate average dwell time of the user for each branch in the flow and analyze a branch with the longest time consuming in the service flow. Therefore the value added service flow may be optimized, relay time for the operator is saved and utilization ratio of the network is improved.

## Description

### Field of the Technology

The present invention relates to service implementing technologies, and more particularly, to a value added service network, an Interactive Voice Response (IVR) server, a flow track analyzing system and methods for analyzing a flow track.

### Background of the Invention

Along with the rapid development of telecommunication network technologies, a new age of telecommunications has begun which is characterized by broadband, high speed transmission and value added contents. For the purpose of continuous development of telecommunication services, it is indispensable to perform the value added service and implement value added service flow. The value added service flow includes a plurality of branches of the value added service, and a user may select different branches according to the requirements in the value added service flow after the system begins executing the value added service flow.

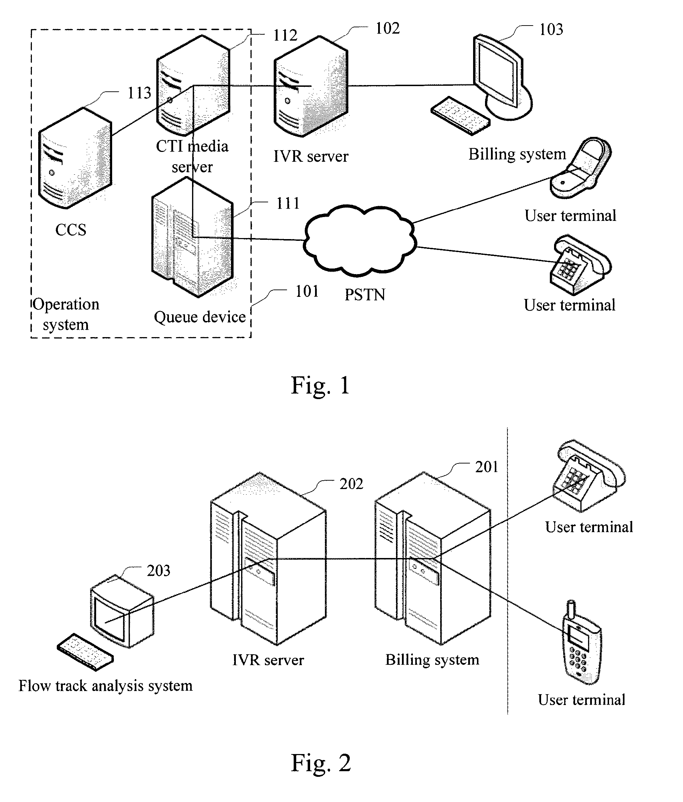

Figure 1 is a schematic diagram illustrating a conventional network structure implementing a value added service flow. As shown in Figure 1, the network implementing a value added service flow includes an operation system 101, an IVR server 102 and a billing system 103. A user dials a system access code corresponding to a value added service via a user terminal, and a call is initiated.

The operation system 101 is used for performing information interaction with a Public Switched Telephone Network (PSTN), receiving the call of the user, providing voice services for the user, controlling speech agents, relaying the call of the user to the IVR server 102.

The IVR server 102 is used for receiving the call of the user from the operation system 101, and executing a value added service flow corresponding to the call.

The billing system 103 is used for counting turnover of the value added service and turnover of each branch in the flow.

The operation system 101 includes an Automatic Call Distributor 111, a Computer Telephony Integration (CTI) media server 112 and a Call Centre Server (CCS) 113.

Conventional solutions for implementing a value added service flow may meet the demands of users to some extent, for better performing value added services, it is still necessary to analyze and find the demands of the users in a higher level for each value added service, i.e., the demands of the users for each branch of the value added service flow, so as to provide services which are more personalized and diversified.

At present, value added service flow statistics of users i.e., flow tracks of value added services corresponding to the users may only be analyzed based on turnover of each branch in the value added service flows when the turnover is calculated every month, so as to acquire demand information of the users for each branch in the value added service flow.

It can be seen that the flow tracks of value added services can not be analyzed in real time in the conventional solutions. Therefore real-time demand information of the users for each branch in the value added service flows can not be available; further, the demand information of the users for different branches at different times is not available. As a result the value added service flows can not be optimized effectively according to the demands of the users, and network resources can not be utilized adequately.

### Summary of the Invention

In view of the above, embodiments of the present invention provide an value added service network which is capable of analyzing a value added service flow track in real time.

Embodiments of the present invention also provide an IVR server which is capable of collecting a value added service flow track, and a flow track analyzing system which is capable of analyzing a value added service flow track, therefore the value added service flow track can be analyzed in real time by a network.

Embodiments of the present invention further provide methods for analyzing a value added service flow track in real time, therefore the value added service flow track can be analyzed in real time.

A value added service network includes: an operation system, an Interactive Voice Response, IVR, server and a flow track analyzing system, wherein
the operation system is capable of receiving a call initiated by a user through dialing a system access code, and relaying the call to the IVR server;
the IVR server is capable of executing a value added service flow corresponding to the call after receiving the call of the user, and recording flow track information in the value added service flow when executing the value added service flow; and
the flow track analyzing system is capable of acquiring the flow track information recorded by the IVR server; analyzing the flow track information, and generating a real-time analyzing result.

An IVR server includes: a call control module, a flow executing module and a flow collecting module; wherein
the call control module is capable of receiving a call relayed from the outside; sending a flow access code corresponding to the call to the flow executing module;
the flow executing module is capable of executing a value added service flow corresponding to the flow access code according to the flow access code; and
the flow collecting module is capable of acquiring flow track information corresponding to a user from the flow executing module and sending the acquired flow track information.
The IVR server further includes a storing module, for storing the acquired flow track information.

A method for analyzing a value added service flow track in real time includes:
relaying a call initiated by a user through dialing a system access code to a IVR server;
executing, by the IVR server, a value added service flow corresponding to the system access code after receiving the call of the user and recording flow track information in the value added service flow;
acquiring and analyzing the flow track information to generate a analyzing result in real time.

It can be seen that, according to embodiments of the present invention, an IVR server executes a value added service flow corresponding to a system access code dialed by a user, and records flow track information in the value added service flow while executing the value added service flow. A flow track analysis system acquires and analyzes the flow track information and obtains a real-time analysing result of the value added service flow track. Therefore analysing a value added service flow track in real time is implemented, and the value added service flow can be optimized effectively according to the demands of users for different branches of the value added service flow at different times, and network resources can be utilized adequately.

### Brief Description of the Drawings

Figure 1 is a schematic diagram illustrating a conventional network structure implementing a value added service flow.
Figure 2 is a schematic diagram demonstratively illustrating a structure of a value added service network according to an embodiment of the present invention.
Figure 3 is a schematic diagram demonstratively illustrating a method for analyzing a value added service flow track in real time according to an embodiment of the present invention.
Figure 4 is a schematic diagram illustrating a structure of a value added service network according to an embodiment of the present invention.
Figure 5 is a schematic diagram illustrating a structure of an IVR server according to an embodiment of the present invention.
Figure 6 is a schematic diagram illustrating a method for analyzing a value added service flow track in real time according to an embodiment of the present invention.

### Detailed Description of the Invention

Embodiments of the present invention are described as follows with reference to accompanying drawings.

In an embodiment of the present invention, an operation system relays a call of a user to an IVR server, and the IVR server executes a value added service flow corresponding to the call of the user and records flow track information in the value added service flow while executing the value added service flow. A flow track analyzing system acquires and analyzes the flow track information and generates a real-time analyzing result i.e., a real-time analyzing result of the value added service flow track corresponding to the current user.

The flow track information includes the type of a branch used by a user in a value added service flow, the time of using a branch in a value added service flow, operating information of selecting a branch by the user, the wait time of a user, the dwell time of a user and the like.

The IVR server records flow track information of a user in a value added service flow while executing the value added service flow, thus the flow track information is kept in real time. Therefore a real-time value added service flow track corresponding to the user can be acquired whenever the flow track information is acquired and analyzed.

The IVR server records flow track information of all users in an access network, so that real-time demand information of a user group can be acquired by analyzing the flow track information. The analyzing process of the flow track information is an analyzing process of value added service flow statistics of users, and the statistical process is performed according to a preset analyzing condition and jointly according to flow logic information of a service.

The analyzing condition includes a statistical method, statistical scope and the like. The flow track analyzing system only analyzes information within the statistical scope in the flow track information. The flow logic information indicates a flow topology structure and logic relationships between each branch, and the IVR server executes the value added service flow according to the flow logic information; the flow logic information may be set via a customization terminal and sent to the IVR server and the flow track analyzing system; the flow track analyzing system analyzes the flow track information in real time according to the flow logic information; so the customization terminal sets the logic information in various formats, and respectively sends the flow logic information to the IVR server and the flow track analyzing system.

For example, if the analyzing condition is that only analyzing a user in a branch of a flow, a analyzing process for the flow track information performed by the flow track analyzing system includes: extracting branch information corresponding to the branch from the flow track information; according to the branch information, analyzing such relevant information as number of users selecting the flow, average dwell time of the users, the longest dwell time of the users, the longest wait time of the users, and thereby statistical data as a real-time analyzing result is obtained.

Figure 2 is a schematic diagram demonstratively illustrating a structure of a value added service network according to an embodiment of the present invention. As shown in Figure 2, the value added service network includes an operation system 201, an IVR server 202, and a flow track analyzing system 203. A user dials a system access code corresponding to a value added service via a user terminal, and a call is initiated.

The operation system 201 is used for receiving the call and relaying the call of the user to the IVR server 202. Here, the call is initiated by the user through dialing the system access code.

The IVR server 202 is used for executing a value added service flow corresponding to the received call upon receiving the call of the user, and recording flow track information of the user in the value added service flow while executing the value added service flow.

The flow track analyzing system 203 is used for acquiring the flow track information recorded by the IVR server 202, analyzing the acquired flow track information, and generating a real-time analyzing result.

The real-time analyzing result is a real-time analyzing result of the value added service flow track corresponding to the current user.

The operation system 201 may receive the call of the user through performing information interaction with a user terminal via a PSTN, and the PSTN may be replaced with a 2G or 3G mobile communication network or other types of networks.

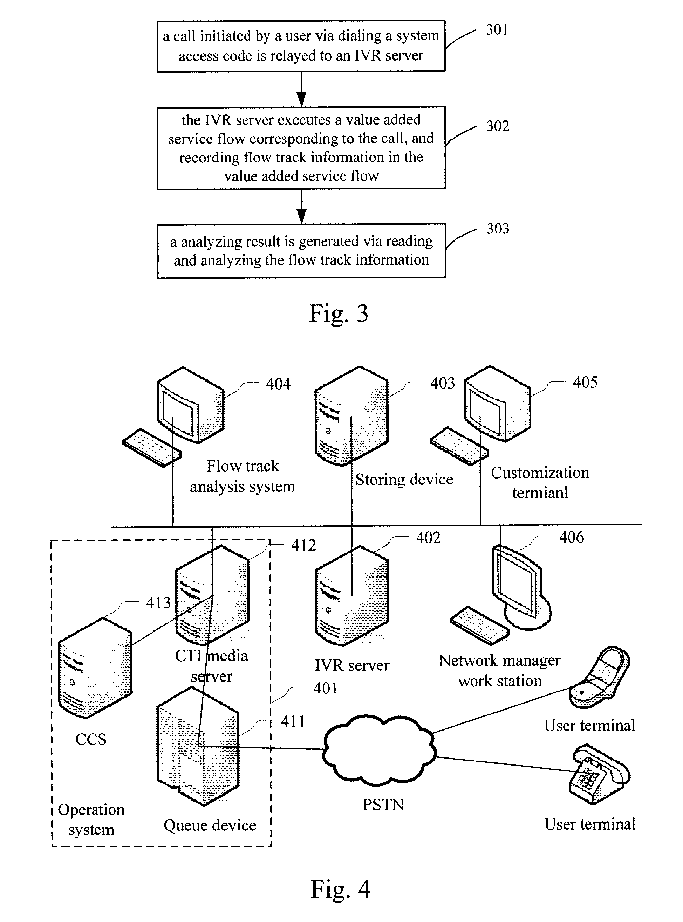

Figure 3 is a schematic diagram demonstratively illustrating a method for analyzing a value added service flow track in real time according to an embodiment of the present invention. The method for analyzing a value added service flow track in real time in the embodiment show in Figure 3 includes the following processes.

At block 301, a call initiated by a user via dialing a system access code is relayed to an IVR server.

At block 302, the IVR server executes a value added service flow corresponding to the received call upon receiving the call of the user, and recording flow track information in the value added service flow upon receiving the call of the user.

At block 303, a flow track analyzing system acquires the flow track information, analyzes the acquired flow track information and generates a real-time analyzing result.

The real-time analyzing result is a real-time analyzing result of a value added service flow track corresponding to the current user.

An operator may obtain the real-time analyzing result by using the above value added service network and the method for analyzing a value added service flow track in real time and optimize the value added service flow accordingly after determining real-time demand of the user.

For example, the operator may determine a critical path of a value added service flow according to a value added service used most by a user and selection information for selecting a branch of the service flow in the real-time analyzing result. According to the flow track information and flow logic information, the operator may also calculate average dwell time of a user for each branch in the flow, analyze and obtain a branch with the longest time consuming in the service flow. Therefore developers may optimize the value added service flow based on the critical path determined or the branch with the longest time consuming obtained by the operator, and then relay time for the operator is saved and utilization ratio of the network is improved.

For another example, the operator may classify users selecting different flow branches according to the flow track information and the flow logic information. After developing a new service, the operator may selectively notify users of relevant types. Therefore utilizing rate of the new service is improved and the brand of a product according to the new service is well known.

The operator may also provide the flow track information and the flow logic information to a third party system by using a data file with a specific format, so as to improve compatibility between different systems.

The above description is an overview of the solution of the present invention, and the value added service network of the present invention is described in detail as follows.

Figure 4 is a schematic diagram illustrating a structure of a value added service network according to an embodiment of the present invention. As shown in Figure 4, the value added service network in the embodiment includes an operation system 401, an IVR server 402, a storing device 403, a flow track analyzing system 404 and a network manager work station 406. A user dials a system access code corresponding to a value added service via a user terminal, and a call is initiated.

The operation system 401 includes an Automatic Call Distributor 411, a CTI media server 412 and a CCS 413. The Automatic Call Distributor 411 is used for performing information interaction with a user terminal via a PSTN, receiving the call of the user, providing the user with a voice service, receiving control instructions from the CTI media server 412, and sending call information to the CTI media server 412.

The CTI media server 412 is used for sending the control instructions from the CCS 413 to the Automatic Call Distributor 411, sending the call information from the Automatic Call Distributor 411 to the CCS 413 and relaying the call of the user from the Automatic Call Distributor 411 to the IVR server 402 according to call connection control information from the CCS 413.

The CCS 413 is used for controlling speech agents, controlling call routing operations of the Automatic Call Distributor 411 via the CTI media server 412, storing and managing such relevant information as routing information of the IVR server 402, sending the call connection control information to the CTI media server 412 according to internally stored routing information of the IVR server 402.

The IVR server 402 is used for receiving the call relayed by the CTI media server 412, executing a value added service flow corresponding to the relayed call and recording flow track information in the value added service flow in the storing device 403 while executing the value added service flow.

The storing device 403 is used for storing the flow track information recorded by the IVR service 402, and providing the flow track information to the flow track analyzing system 404.

The flow track analyzing system 404 is used for acquiring from the storing device 403 or directly receiving the flow track information, storing and managing a preset analyzing condition, analyzing value added service flow statistics of the user according to flow logic information and information corresponding to statistical scope determined by the analyzing condition in the flow track information and generating a real-time analyzing result.

In practice, the value added service network may also include a customization terminal 405. And the customization terminal 405 is used for sending preset flow logic information to the IVR server 402 and the flow track analyzing system 404.

In view of above, the IVR server 402 receives and stores the flow logic information from the customization terminal 405; thereby the flow logic information is updated. In this case, the value added service flow corresponding to the call may be executed according to the updated flow logic information.

The flow track analyzing system 404 receives and stores the flow logic information from the customization terminal 405, thereby the flow logic information is updated. In this case, the flow track analyzing system 404 may analyze the value added service flow statistics of the user according to the updated flow logic information and information corresponding to statistical scope determined by the analyzing condition in flow track information to generate the real-time analyzing result.

The flow track analyzing system 404 may also provide the real-time analyzing result to an operator or send the real-time analyzing result to outside of the network.

The network manager work station 406 is used for maintaining and managing the network.

After the real-time analyzing result is generated through using the network described above, real-time demand information of the user for each branch in the value added service flow is acquired according to the real-time analyzing result, the value added service flow is optimized according to the real-time demand information, the flow logic information is modified or reset, an analyzing condition is maintained and managed by the flow track analyzing system 404. Therefore a closed loop characteristic is provided while the real-time analyzing is performed.

In the network of the embodiment, the Automatic Call Distributor 411 performs information interaction with the user terminal via the PSTN, or via a 2G or 3G mobile communication network or other types of networks. The storing device 403 is an independent device, or the storing device may also be a storing module located in the IVR server 402 or a storing module located in the flow track analyzing system 404. Since the flow track information may be information with varied format, such as information in a file format, data information, a variety of messages, etc., the storing device 403 may be a devices corresponding to the information with varied format, such as a file server, a database, a message resolution device, etc. The flow track analyzing system 404 may acquire and analyze the flow track information as required by the operator, or acquire and analyze the flow track information periodically. The network of embodiments of the present invention may also include a billing system which is used for calculating turnover of each branch in the value added service flow.

In the embodiment, the IVR server collects the flow track information, which is indispensable for analyzing the value added service flow track network in real time.

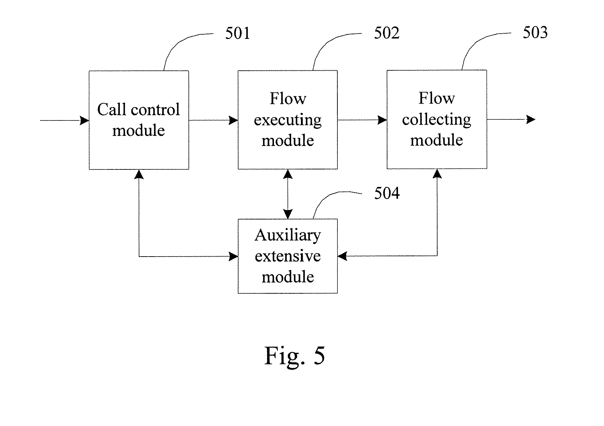

Figure 5 is a schematic diagram illustrating a structure of an IVR server according to an embodiment of the present invention. As shown in Figure 5, the IVR server in this embodiment includes a call control module 501, a flow executing module 502, a flow collecting module 503, and an auxiliary extensive module 504.

The call control module 501 is used for receiving a call relayed from the outside, extracting a system access code in the call, converting the extracted system access code into a flow access code according to a preset mapping relationship and sending the converted flow access code to the flow executing module 502.

The flow executing module 502 is used for executing a value added service flow corresponding to the flow access code.

The flow collecting module 503 is used for acquiring flow track information corresponding to the user from the flow executing module 502, and recording the flow track information in the outside.

The auxiliary extensive module 504 is used for providing auxiliary functions for the call control module 501, the flow executing module 502, and the flow collecting module 503, or functioning as various extensive interfaces for the IVR server, or providing the auxiliary functions and functioning as various extensive interfaces. The auxiliary functions may include providing a file operation, arithmetic comparing, online loading of a flow and the like.

There may be a plurality of the auxiliary extensive modules 504. Each auxiliary extensive module 504 respectively provides the auxiliary functions for the call control module 501, the flow executing module 502, and the flow collecting module 503.

If there is a storing module in the above device, the flow collecting module 503 may record the flow track information in the storing module.

A method for analyzing a value added service flow track in real time based on the above value added service network is described as below.

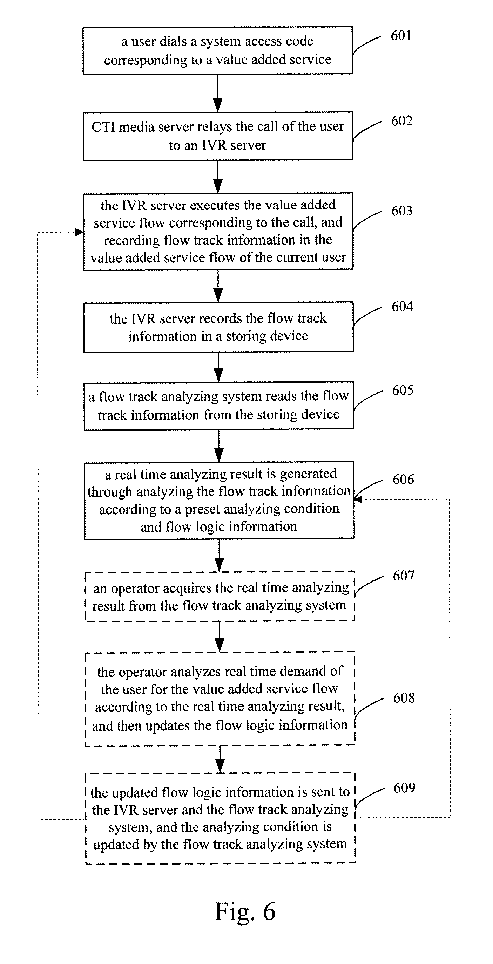

Figure 6 is a schematic diagram illustrating a method for analyzing a value added service flow track in real time according to an embodiment of the present invention. In the embodiment, the method for analyzing a value added service flow track in real time includes the following processes.

At blocks 601 to 602, a user dials a system access code corresponding to a value added service flow via a user terminal, and initiates a call as required. A CTI media server performs information interaction with an Automatic Call Distributor under control of a CCS. The CCS sends call connection control information to the CTI media server according to internally stored relevant information of an IVR server. The CTI media server relays the call of the user to the IVR server according to the call connection control information from the CCS.

At blocks 603 to 604, the IVR server executes the value added service flow corresponding to the relayed call. The user sends selection information via the user terminal as required and selects a branch in the value added service flow. Meanwhile the IVR server records in a storing device flow track information of the current user in the value added service flow.

At this block, the selection information sent by the user may be key information, speech recognition, voiceprint recognition or the like. The operation of recording the flow track information performed by the IVR server may be synchronous with operation of using the value added service flow performed by the user. And the flow track information in the value added service may also be recorded after quitting the value added service flow by the user.

In the operation of above blocks, one user connects to the network, and the network records flow track information corresponding to the user. The system for analyzing a value added service flow track in real time supports that multiple users use a value added service at the same time. Therefore operations of the above blocks corresponding to the multiple users are executed at the same time when the value added service is used by the multiple users at the same time.

At blocks 605 to 606, the flow track analyzing system acquires the flow track information from the storing device, analyzes the flow track information according to a preset analyzing condition and internally stored flow logic information, and generates a real-time analyzing result, i.e., a real-time analyzing result of the value added service flow corresponding to the current user.

When multiple users use the value added service at the same time, the flow track analyzing system may acquire from the storing device the flow track information of one user or the flow track information of multiple users, which is determined according to relevant information in the analyzing condition.

The specific processing procedure included in the analyzing procedure, i.e., the procedure for analyzing value added service flow statistics of the user may be determined by statistical scope in the analyzing condition. For example, the analyzing procedure may be at least one of the following procedures: a procedure for calculating dwell time of the user in all flow branches; a procedure for determining a branch with the longest dwell time of the user according to the calculated result of the dwell time, and a procedure for counting times of all the branches selected by the user.

At block 607, an operator acquires the real-time analyzing result from the flow track analyzing system.

At this block, the flow track analyzing system may also send the real-time analyzing result to the outside of the network, and then the operator acquires the real-time analyzing result from the outside.

At block 608, the operator analyzes real-time demand of the user for the value added service flow according to the real-time analyzing result and then updates the flow logic information by modifying or resetting the flow logic information according to the real-time demand of the user.

At block 609, the updated flow logic information is sent via the customization terminal to the IVR server and the flow track analyzing system. And the analyzing condition is updated and maintained by the flow track analyzing system. At block 603, the IVR server executes the value added service flow corresponding to the system access code according to the updated flow logic information. At block 606, the flow track analyzing system analyzes the flow track information according to the updated analyzing condition and the flow logic information.

In the above method, blocks 607 to 609 is a feedback process, and in the feedback process, the operator acquires the real-time analyzing result, executes the flow and analyzes the flow track according to the real-time analyzing result. Blocks 607 to 609 may not be performed, and the procedure is ended after block 606 is performed.

In the method of the embodiment, the user terminal performs information interaction with the Automatic Call Distributor via a PSTN. The user terminal may also perform the information interaction with the Automatic Call Distributor via a 2G or 3G mobile communication network or other types of networks.

It can be seen that according to the embodiments of the present invention, the IVR server executes the value added service flow corresponding to the system access code dialed by the user, records the flow track information in the value added service flow while executing the value added service flow. The flow track analyzing system acquires and analyzes the flow track information and generates the real-time analyzing result of the flow track for the value added service.

In addition, the operator may determine a critical path of the value added service flow according to a value added service used most by the user and selection information for selecting a branch of the service flow in the real-time analyzing result. According to flow track information and flow logic information, the operator may also calculate average dwell time of the user for each branch in the flow, analyze and obtain a branch with the longest time consuming in the service flow. Therefore developers may optimize the value added service flow based on the critical path determined by the operator or the branch with the longest time consuming obtained by the operator. Therefore relay time for the operator is saved and utilization ratio of the network is improved.

The foregoing descriptions are only preferred embodiments of the present invention and are not for use in limiting the protection scope thereof. Any modification, equivalent substitution, improvement within the principle of the invention should be covered in the protection scope of the invention.

## Claims

1. A value added service network, **characterized in, that** the value added service network comprises: an operation system, an Interactive Voice Response, IVR, server and a flow track analyzing system, wherein
the operation system is capable of receiving a call initiated by a user through dialing a system access code, and relaying the call to the IVR server;
the IVR server is capable of executing a value added service flow corresponding to the call after receiving the call of the user, and recording flow track information in the value added service flow when executing the value added service flow; and
the flow track analyzing system is capable of acquiring the flow track information recorded by the IVR server; analyzing the flow track information, and generating a real-time analyzing result.

2. The network of Claim 1, wherein the operation system comprise: an Automatic Call Distributor, a Computer Telephony Integration (CTI) media server and a Call Centre Server (CCS); wherein
the Automatic Call Distributor is capable of receiving the call of the user, providing the user with a voice service, receiving control instructions from the CTI media server, and sending call information to the CTI media server;
the CTI media server is capable of sending the control instructions from the CCS to the Automatic Call Distributor, sending the call information from the Automatic Call Distributor to the CCS and relaying the call of the user from the Automatic Call Distributor to the IVR server according to call connection control information from the CCS;
the CCS is capable of controlling speech agents, controlling call routing operations of the Automatic Call Distributor via the CTI media server, storing and managing relevant information of the IVR server, sending the call connection control information to the CTI media server according to internally stored routing information of the IVR server.

3. The network of Claim 1, further comprising: a storing device, for storing the flow track information recorded by the IVR server and sending the flow track information to the flow track analyzing system; wherein
the IVR server is further capable of recording the flow track information to the storing device; and
the flow track analyzing system is further capable of receiving the flow track information from the storing device.

4. The network of Claim 3, wherein the storing device is an independent device, a storing module located in the IVR server or a storing module located in the flow track analyzing system.

5. The network of any of Claims 1 to 4, further comprising: a customization terminal, for sending flow logic information preset to the IVR server and the flow track analyzing system; wherein
the flow logic information comprises logical relations between branches in the value added service flow.

6. An Interactive Voice Response, IVR, server, **characterized in, that** the IVR server comprises: a call control module, a flow executing module and a flow collecting module; wherein
the call control module is capable of receiving a call relayed from the outside; sending a flow access code corresponding to the call to the flow executing module;
the flow executing module is capable of executing a value added service flow corresponding to the flow access code according to the flow access code; and
the flow collecting module is capable of acquiring flow track information corresponding to a user from the flow executing module and sending the acquired flow track information.

7. The IVR server of Claim 6, further comprising: a storing module, for storing the acquired flow track information.

8. A method for analyzing a value added service flow track in real time, comprising:
relaying a call initiated by a user through dialing a system access code to a IVR server;
executing, by the IVR server, a value added service flow corresponding to the system access code after receiving the call of the user and recording flow track information in the value added service flow;
acquiring and analyzing the flow track information to generate a analyzing result in real time.

9. The method of Claim 8, wherein relaying the call initiated by the user through dialing the system access code to the IVR server comprises: sending, by a Call Centre Server, call connection control information to a Computer Telephony Integration (CTI) media server according to relevant information of the IVR server internally stored; relaying the call of the user, by the CTI media server to the IVR server according to the call connection control information from the Call Centre Server.

10. The method of Claim 8, wherein executing, by the IVR server, the value added service flow corresponding to the system access code and recording the flow track information in the value added service flow comprises: executing, by the IVR server, the value added service flow corresponding to the system access code; selecting, by the user, a branch of the value added service flow as required via a user terminal through sending selection information; and recording, by the IVR server, the flow track information in the selected branch of the value added service flow of the user.

11. The method of Claim 10, wherein recording the flow track information in the selected branch of the value added service flow of the user comprises: recording the flow track information in the selected branch of the value added service flow of the user in a storing device.

12. The method of Claim 11, wherein acquiring the flow track information comprises:
acquiring, by a flow track analyzing system, the flow track information from the storing device.

13. The method of Claim 8, wherein analyzing the flow track information comprises:
analyzing, by a flow track analyzing system, value added service flow statistics according to information in the flow track information within a preset scope and flow logic information from a customization terminal.

14. The method of Claim 13, after generating the analyzing result further comprising:
sending, by the customization terminal, the flow logic information to the flow track analyzing system; receiving and storing, by the flow track analyzing system, the flow logic information from the customization terminal.
